# EUROPÄISCHE PATENTSCHRIFT

(11) **EP 4 301 530 B1**
(45) Veröffentlichungstag und Bekanntmachung des Hinweises auf die Patenterteilung: **22.01.2025**
(21) Anmeldenummer: 22709229.3
(22) Anmeldetag: 10.02.2022
(51) Int. Cl.: B21D 22/14, B23B 31/19, B21D 22/18, B21D 53/30, B21D 53/26, B23B 31/40, B23B 31/16

(54) **DRÜCKWALZMASCHINE UND VERFAHREN ZUM DRÜCKWALZEN**
FLOW-FORMING MACHINE AND METHOD FOR FLOW FORMING
MACHINE DE FLUOTOURNAGE ET PROCÉDÉ DE FLUOTOURNAGE

(30) Priorität: 02.03.2021 DE 202021101035 U
(43) Veröffentlichungstag der Anmeldung: 10.01.2024
(73) Patentinhaber: Leifeld Metal Spinning GmbH, 59229 Ahlen (DE)
(72) Erfinder: NILLIES, Benedikt, 59227 Ahlen (DE)
(74) Vertreter: Wunderlich & Heim Patentanwälte PartG mbB
(86) Internationale Anmeldenummer: PCT/EP2022/053236
(87) Internationale Veröffentlichungsnummer: WO 2022/184400

(56) Entgegenhaltungen:
- WO-A1-2018/133959
- WO-A1-2019/185239
- WO-A2-2007/140257
- JP-A- 2005 081 449

## Beschreibung

Die Erfindung betrifft eine Drückwalzmaschine zum Drückwalzen eines im Wesentlichen rotationssymmetrischen Werkstücks mit einem trommelförmigen Umfangsabschnitt, mit einer Spindel, welche um eine Spindelachse drehend antreibbar ist, einer Spanneinrichtung, welche an der Spindel angeordnet ist und mehrere Spannelemente aufweist, welche zwischen einer Spannposition, in welcher die Spannelemente an einem Außenumfangsbereich des Werkstücks mit einer vorgegebenen Spannkraft anliegen und das Werkstück zum Umformen an der Spindel halten, und einer Löseposition, in welcher die Spannelemente zum Lösen des Werkstücks von der Spindel von dem Werkstück definiert beabstandet sind, mittels einer ersten Stelleinrichtung verstellbar sind, wobei durch die erste Stelleinrichtung die Spannkraft zum Halten des Werkstücks an der Spindel beim Umformen aufbringbar ist, und mehreren Umformrollen, welche an den trommelförmigen Umfangsabschnitt zum Umformen des Umfangsabschnitts des Werkstücks radial und axial zustellbar sind, gemäß dem Oberbegriff des Anspruchs 1.

Die Erfindung betrifft weiter ein Verfahren zum Drückwalzen gemäß dem Oberbegriff des Anspruchs 18.

Beim Drückwalzen eines Werkstücks, insbesondere zur Herstellung eines Fahrzeugrades, wird ein scheibenförmiges oder topfförmiges Werkstück in Rotation versetzt, wobei ein trommelförmiger Wandbereich unter Veränderung der Wanddicke des Ausgangswerkstücks ausgeformt wird. Hierbei treten sehr hohe Umfangskräfte in axialer und in Umfangsrichtung am Werkstück auf. Um das drehend an einer Spindel angetriebene Werkstück zuverlässig fest an einer Spindel zu halten, ist an der Antriebsspindel eine Spanneinrichtung vorzusehen, welche ausreichend hohe Spannkräfte auf das Werkstück ausüben kann. Die an einer Drückwalzmaschine auftretenden Bearbeitungskräfte können dabei um ein Vielfaches höher sein als Bearbeitungskräfte, welche beispielsweise an einer Drehmaschine zur spanabhebenden Materialbearbeitung auftreten können.

Um beim Drückwalzen die notwendigen Spannkräfte zum positionsgenauen Halten des Werkstücks an der Spindel aufzubringen, ist es üblicherweise bekannt, das Werkstück mittels eines Gegenhalters axial gegen die Spindel zu drücken. Hierbei können durch axial wirkende Hydraulikzylinder hohe axiale Spannkräfte aufgebracht werden.

Allerdings ist bei einem axialen Einspannen eines Werkstücks an einer Drückwalzmaschine durch einen Gegenhalter ein Innenraum innerhalb der auszuformenden trommelförmigen Werkstückwand vollständig oder zumindest teilweise belegt. Damit steht der belegte Innenraum als Verfahrensraum nicht mehr zur Verfügung.

Aus der EP 3 351 313 A1 ist eine gattungsgemäße Drückwalzmaschine bekannt, bei welcher zum Ausformen eines Fahrzeugrades ein Innenraum zur Zustellung von inneren Umformrollen benötigt wird. Insgesamt wird eine Drückwalzmaschine beschrieben, bei welcher ein trommelförmiger Werkstückbereich zwischen mindestens einer Innenrolle und mindestens einer zugeordneten Außenrolle ausgeformt wird. Zum Einspannen des Werkstücks ist eine Spanneinrichtung mit äußeren Spannklauen vorgesehen, mit welchen das Werkstück beim Drückwalzen an einer radialen Außenkante gehalten wird. Die Spannklauen weisen dabei einen linearen Verschiebeweg und eine Stelleinrichtung auf, mit welchen die Spannklauen zwischen einer Freigabeposition und der Spannposition zum Halten des Werkstücks verstellbar sind. Die Stelleinrichtung bewirkt dabei eine Verstellung der Spannklauen und bringt die notwendige Spannkraft auf das Werkstück zum Halten an der Spindel auf.

Bei derartigen Spanneinrichtungen sind die Spannwege möglichst klein einzustellen, um ein effizientes Spannen bei der gewünschten hohen Spannkraft sicherzustellen. Treten Änderungen, insbesondere am Außendurchmesser eines Werkstücks auf, ist die Spanneinrichtung mit den entsprechenden Zustell- und Spannwegen neu zu justieren.

Der Erfindung liegt die **Aufgabe** zugrunde, eine Drückwalzmaschine und ein Verfahren zum Drückwalzen eines Werkstücks anzugeben, welche ein besonders effizientes Bearbeiten der Werkstücke ermöglichen.

Nach der Erfindung wird die Aufgabe zum einen durch eine Vorrichtung mit den Merkmalen des Anspruchs 1 und zum anderen durch ein Verfahren mit den Merkmalen des Anspruchs 18 gelöst. Bevorzugte Ausführungsformen der Erfindung sind in den abhängigen Ansprüchen angegeben. Die Erfindung umfasst grundsätzlich auch ein Verfahren zum Drückwalzen eines Werkstücks mit einer solchen Drückwalzmaschine.

Die erfindungsgemäße Drückwalzmaschine ist dadurch gekennzeichnet, dass an der Spanneinrichtung eine zweite Stelleinrichtung vorgesehen ist, mit welcher eine Position der Spannelemente zum Anpassen an einen Durchmesser des Werkstücks in einer radialen Richtung einstellbar ist, und dass eine Steuereinrichtung vorgesehen ist, mit welcher die zweite Stelleinrichtung abhängig von dem Durchmesser des umzuformenden Werkstücks betätigbar ist, so dass die Spannelemente abhängig vom Werkstückdurchmesser radial vorpositioniert werden.

Eine Grundidee der Erfindung liegt darin, eine Drückwalzmaschine mit einer Spanneinrichtung vorzusehen, welche eine erste Stelleinrichtung zum Verstellen der Spannelemente aufweist, wobei die erste Stelleinrichtung stets einen gleichen oder im Wesentlichen gleichen Verstellweg für die Spannelemente sicherstellt, so dass nach einem vorgesehenen Verstellweg der Spannelemente eine gewünschte Spannkraft durch die erste Stelleinrichtung erreicht ist. Darüber hinaus weist die Spanneinrichtung der erfindungsgemäßen Drückwalzmaschine eine zweite Stelleinrichtung auf, mit welcher zum Anpassen an einen Durchmesser des Werkstücks eine Vorpositionierung der Spannelemente in radialer Richtung einstellbar ist. Diese Vorpositionierung wird dabei von einer Steuereinrichtung automatisch gesteuert, welche anhand von Informationen zu dem zu bearbeitenden Werkstück und insbesondere dem Durchmesser des umzuformenden Werkstücks die zweite Stelleinrichtung betätigt und so eine geeignete Vorpositionierung der Spannelemente für die eigentliche Spannbewegung durch die erste Stelleinrichtung vorbereitet.

Mit der Erfindung wird nicht nur eine besonders gute Spannung an der Außenseite des Werkstücks sichergestellt, so dass ein Drückwalzen eines Werkstücks auch bei hohen Umformkräften zuverlässig erfolgen kann. Durch eine Vorpositionierung kann auch die Zeitdauer für die eigentliche Spannung eines Werkstücks verkürzt werden, wodurch sich der Anteil von Nebenzeiten bei der Bearbeitung eines Werkstücks verringert. Dies verbessert die Maschinennutzung und reduziert die Kosten.

Darüber hinaus besteht ein Vorteil der Erfindung darin, dass durch eine automatische Vorpositionierung der Spannelemente durch die zweite Stelleinrichtung über die Steuereinrichtung eine hohe Bearbeitungsflexibilität erreicht werden kann. Es können somit ohne zeitaufwändige Umbauten an einer Spanneinrichtung eine Vielzahl von Werkstücken mit unterschiedlichen Durchmessern in einer nahezu beliebigen Reihenfolge effizient drückgewalzt werden. Vorzugsweise wird die zweite Stelleinrichtung nur betätigt, wenn ein Wechsel der Werkstückart vorliegt, wenn also Werkstücke mit unterschiedlichen Ausgangsabmessungen und Durchmesser zu bearbeiten sind.

Eine bevorzugte Ausführungsform der Erfindung besteht darin, dass die Spannelemente durch die erste Stelleinrichtung zwischen der Spannposition und der Löseposition axial und/oder radial verstellbar sind. Insbesondere werden die Spannelemente durch die erste Stelleinrichtung zunächst radial und dann axial zugestellt, wobei die eigentliche Spannkraft ausschließlich oder zu einem großen Teil durch die Axialbewegung der Spannelemente bewirkt wird. Hierdurch kann das Werkstück besonders zuverlässig gegen die Spindel gedrückt und daran gehalten werden.

Grundsätzlich kann die Stelleinrichtung beliebig ausgebildet sein, etwa durch eine Kugelumlaufspindel. Besonders hohe Stellkräfte können nach einer Weiterbildung der Erfindung dadurch erzielt werden, dass die erste Stelleinrichtung mindestens einen Stellzylinder aufweist, welcher vorzugsweise hydraulisch betrieben ist. Der Stellzylinder kann die notwendige Spannkraft alleine oder in Kombination mit mindestens einem weiteren Krafterzeugungselement, etwa einem Tellerfederpaket, erzeugen.

Dabei kann eine weitere Erhöhung der Spannkräfte insgesamt dadurch erzielt werden, dass jedem Spannelement ein Stellzylinder zugeordnet ist, durch welchen das Stellelement jeweils zwischen der Spannposition und der Löseposition verfahrbar ist. In der Löseposition sind die Spannelemente jeweils soweit vom Werkstück beabstandet, so dass dieses von der Spindel entnommen und ein neues Werkstück eingesetzt werden kann.

Grundsätzlich können die einzelnen Spannelemente an verfahrbaren Schlitten für eine Vorpositionierung vorgesehen sein. Besonders zweckmäßig ist es nach einer Weiterbildung der Erfindung, dass jedes Spannelement auf einer drehbaren Scheibe exzentrisch zu einer Scheibenachse gelagert ist, wobei die Scheibenachsen parallel zur Spindelachse gerichtet sind, und dass die zweite Stelleinrichtung ein Stellglied zum Verdrehen der Scheiben mit den Spannelementen aufweist. Dabei kann grundsätzlich jeder drehbaren Scheibe ein Stellglied zum Verdrehen zugeordnet sein. Besonders vorteilhaft ist es, dass zum Verdrehen aller Scheiben ein einzelnes Stellglied, insbesondere ein Stellrad vorgesehen ist. Dieses kann über ein entsprechendes Antriebsritzel der zweiten Stelleinrichtung angesteuert und betätigt werden. Grundsätzlich kann die Drückwalzmaschine mit einer horizontal gerichteten Spindelachse versehen sein.

Alternativ ist es nach einer Ausführungsform der Erfindung bevorzugt, dass hier das Spannelement auf einem radial verfahrbaren oder schwenkbaren Schlitten gelagert ist und die zweite Stelleinrichtung zum radialen Verfahren oder Verschwenken der Schlitten ausgebildet ist. Auf dem Schlitten kann dabei auch ein Stellzylinder zum Verfahren und Spannen des jeweiligen Spannelementes angeordnet sein.

Eine besonders kompakte Bauform wird nach einer Weiterbildung der Erfindung dadurch erzielt, dass die Spindelachse vertikal angeordnet ist und dass die Spanneinrichtung hängend an der Spindel angeordnet ist, wobei ein Werkstück von unten einspannbar ist. Eine derartige vertikale Aufhängung des Werkstücks erleichtert insbesondere ein Entnehmen des Werkstücks durch eine automatische Be- und Entladeeinrichtung, insbesondere einen Manipulatorarm und/oder Roboter. Mit Lösen der Spanneinrichtung kann dann das Werkstück in einfacher Weise, vorzugweise durch den gleichen Manipulator und /oder Roboter nach unten entnommen werden.

Nach einer weiteren bevorzugten Ausführungsform der Erfindung ist es vorteilhaft, dass mindestens eine Abzugsöffnung vorgesehen ist und dass eine Absaugeinrichtung vorgesehen ist, mit welcher Luft und/oder Dunst durch die mindestens eine Abzugsöffnung absaugbar ist. Vorzugsweise kann die Abzugsöffnung im Bereich der Spanneinrichtung, insbesondere bei einer hängenden Anordnung vorgesehen sein. Über die eine oder die mehreren Abzugsöffnungen kann insbesondere Dunst mit Bestandteilen von Öl oder Kühlflüssigkeit effizient aus dem Arbeitsraum abgeführt und einer Abscheideeinrichtung und/oder einer Wiederaufbereitungseinrichtung zum Rückgewinnen von Kühl- und Schmierflüssigkeit zugeführt werden.

Eine weitere Verbesserung bei der Bearbeitung wird gemäß einer Ausführungsform der Erfindung dadurch erreicht, dass an der Spanneinrichtung ein mittiger Zentrierdorn angeordnet ist, welcher vorzugsweise federnd und/oder flexibel zentrierend ausgebildet ist, so dass Werkstücke mit unterschiedliche Bohrungsdurchmesser sicher und genau zentriert werden können. Dieser ermöglicht ein zuverlässiges und zugleich schonendes Zentrieren des Werkstücks an der Spindel vor oder beim Spannen.

Ein besonders effizienter Bearbeitungsablauf wird nach einer Ausführungsvariante der Erfindung dadurch erzielt, dass die Steuereinrichtung zum Zuführen von Daten zum Werkstück, insbesondere von Daten zum Durchmesser des Werkstücks, mit einer Leitstelle und/oder mindestens einem Sensor zum Erfassen des Werkstücks mit dem Durchmesser verbunden ist. Über eine zentrale Leitstelle kann der Drückwalzmaschine stets eine Information zur Art des Werkstücks zugeführt werden, welches aktuell zu bearbeiten ist. Bei einer chaotischen Fertigung mit einer Vielzahl von möglichen Vorbearbeitungsstationen kann die Art des Werkstücks, insbesondere ein Durchmesser, durch mindestens einen Sensor erfasst werden, welcher mit der Steuereinrichtung in Verbindung steht. Abhängig von den zugeführten Daten kann über die Steuereinrichtung nötigenfalls die zweite Stelleinrichtung zur Vorpositionierung der Spannelemente betätigt werden.

Weiterhin ist es vorteilhaft, dass für ein flexibles Umformen jedes einzelnen Werkstücks die Steuereinrichtung eine Bewegung der Umformrollen beim Umformen steuert. Abhängig von der Art des zu bearbeitenden Werkstückes können so die Umformrollen definiert von der Steuereinrichtung verfahren werden, um einen gewünschten Wanddickenverlauf und eine gewünschte Werkstückkontur auszuformen. Mit der erfindungsgemäßen Drückwalzmaschine kann so eine flexible und effiziente Fertigung selbst von kleinen Stückzahlen oder sogar einzelnen Werkstücken erzielt werden.

Eine besonders hohe Flexibilität wird insbesondere nach einer Weiterbildung der erfindungsgemäßen Drückwalzmaschine dadurch erzielt, dass mindestens eine Außenumformrolle und mindestens eine Innenumformrolle vorgesehen sind, welche an einem Außenumfang beziehungsweise einem Innenumfang des trommelförmigen Umfangswandabschnitts des Werkstücks anliegen und welche zum Umformen und Ausformen eines Wanddickenverlaufs mit sich ändernder Wanddicke durch die Steuereinrichtung in axialer und radialer Richtung zueinander verstellbar sind und/oder ein Anstellwinkel der mindestens einen Innenumformrolle veränderbar ist. Somit kann nahezu bei jedem einzelnen Werkstück ein individueller Kontur- und Wanddickenverlauf in einer gleichen Effizienz wie bei einer Massenfertigung hergestellt werden.

Eine weitere bevorzugte Ausführungsform der Erfindung besteht darin, dass zwei Wechselspindeln vorgesehen sind, wobei sich eine erste Wechselspindel im Arbeitsraum befindet, während eine zweite Wechselspindel sich in einer Be- und/oder Entladeposition befindet, wobei die zwei Wechselspindeln wechselweise zueinander verfahrbar sind. Die zwei Wechselspindeln können reversierend verfahrbar sein, wobei die beiden Wechselspindeln wechselweise die Arbeitsposition im Arbeitsraum und eine der zwei Be- und/oder Entladepositionen zum Be- beziehungsweise Entladen des Werkstücks einnehmen. Beispielsweise kann ein Revolvermechanismus vorhanden sein. Die einzelnen Wechselspindeln können auch unterschiedliche Be- und Entladepositionen voneinander aufweisen, wobei von diesen Positionen dann die jeweilige Wechselspindel in den jeweiligen Arbeitsraum verfahren wird. Dies ermöglicht ein schnelles Be- und/oder Entladen und damit eine insgesamt schnellere Bearbeitungszeit.

Gemäß einer Weiterbildung der Erfindung ist es vorteilhaft, dass eine Messeinrichtung angeordnet ist, durch welche prozessrelevante Abmessungen und Daten des Werkstücks vor und/oder nach dem Umformen erfassbar sind. Die Messeinrichtung kann insbesondere einen optischen und/oder thermischen Sensor zur Erfassung des Werkstücks aufweisen. Die Messeinrichtung steht insbesondere mit der Steuereinrichtung in Verbindung.

Grundsätzlich ist die Drückwalzmaschine für ein Kaltumformverfahren ausgelegt. Für bestimmte Bearbeitungen kann es vorteilhaft sein, dass mindestens eine Kühleinrichtung und/oder eine Wärmeschutzeinrichtung für eine Halbwarm- und/oder Warmumformung des Werkstücks vorgesehen sind. Insbesondere für das Formen von Leichtmetallrädern kann so eine gezielte Temperaturführung des Werkstücks erreicht und eingestellt werden. Bei der Warmumformung kann zusätzlich die Rohteiltemperatur des Werkstücks durch ein Pyrometer oder einen Temperatursensor gemessen werden, bevor das Rohteil in den Arbeitsbereich der Drückwalzmaschine eingebracht wird.

Vorzugsweise werden an der Drückwalzmaschine die Rollen des Innen- und Außensupportes als Standard-Universalrollen ausgeführt. Besondere Radgeometrien bzw. Radnabengeometrien können jedoch einen Rollenwechsel erforderlich machen. Eine weitere Verbesserung hinsichtlich der Flexibilität der erfindungsgemäßen Drückwalzmaschine kann dadurch erreicht werden, dass an einem Innensupport und/oder einem Außensupport an mindestens einer Lagerung einer Außenumformrolle und/oder mindestens einer Innenumformrolle eine Schnellspanneinrichtung angeordnet ist, mit welcher ein halbautomatischer oder vollautomatischer Rollenwechsel durchführbar ist. Die Rollengeometrie kann dabei einem entsprechenden Konturverlauf eines speziellen Werkstücks in effizienter Weise angepasst werden. Hierdurch wird die mit einer Drückwalzmaschine erreichbare Formenvielfalt an Werkstücken noch weiter erhöht.

Für eine gezielte Temperaturführung bei der Umformung kann es weiterhin zweckmäßig sein, dass in einem Umformbereich das Werkstück eine unterschiedliche Temperatur zu einem Spann- und/oder Zentrierbereich aufweist. Vorzugsweise weist der Bereich der Speichen eine geringere Temperatur als der Umformbereich auf. Insbesondere kann in dem Umform- oder Arbeitsbereich des Werkstücks, an welchem die Umformrollen angreifen, eine erhöhte Temperatur vorgesehen werden.

Die Erfindung umfasst auch ein Verfahren zum Drückwalzen eines im Wesentlichen rotationssymmetrischen Werkstücks mit einem trommelförmigen Umfangsabschnitt, insbesondere mit einer der zuvor beschriebenen Drückwalzmaschinen, wobei das Werkstück mittels einer Spanneinrichtung an einer Spindel eingespannt wird, wobei die Spanneinrichtung mehrere Spannelemente aufweist, welche zwischen einer Spannposition, in welcher die Spannelemente an einem Außenumfangsbereich des Werkstücks mit einer vorgegebenen Spannkraft anliegen und das Werkstück zum Umformen an der Spindel halten, und einer Löseposition, in welcher die Spannelemente zum Lösen des Werkstücks von der Spindel von dem Werkstück definiert beabstandet sind, mittels einer ersten Stelleinrichtung verstellt werden, wobei durch die erste Stelleinrichtung die Spannkraft zum Halten des Werkstücks an der Spindel beim Umformen aufgebracht wird, die Spindel um eine Spindelachse drehend angetrieben wird und mehrere Umformrollen an das Werkstück zum Umformen des Umfangswandabschnitts radial und axial zugestellt werden, wobei das Verfahren dadurch gekennzeichnet ist, dass an der Spanneinrichtung eine zweite Stelleinrichtung vorgesehen ist, mit welcher eine Position der Spannelemente an einen Durchmesser des Werkstücks angepasst und die Spannelemente in einer radialen Richtung eingestellt werden, und dass eine Steuereinrichtung vorgesehen ist, mit welcher die zweite Stelleinrichtung abhängig von dem Durchmesser des umzuformenden Werkstücks betätigt wird, so dass die Spannelemente abhängig vom Werkstückdurchmesser radial vorpositioniert werden.

Eine besonders energieeffiziente Drückwalzmaschine weist die Möglichkeit der Rekuperation beim Abbremsen mindestens einer Hauptspindle mit Spannfutter aus. Trotz Leichtbau des Spannfutters sind hier nicht unerhebliche Massen zu Beschleunigen bzw. Abzubremsen. Vorzugsweise wird mit der rekuperierten Energie der ersten Wechselspindel die zweite Wechselspindel und/oder ein Schwungmassenenergiespeicher beschleunigt. Alternativ ist auch eine Rekuperation der Energie mit Netzrückspeisung möglich.

Um die Verfügbarkeit der Drückwalzmaschine besonders hoch zu gestalten, ist die Maschine mit zwei Wechselspindeln auch als Einspindelmaschine wirtschaftlich betreibbar. Bei geringer Auslastung, bei fehlendem Rohmaterial, Wartungen oder Störungen an einer Wechselspindel und/oder bei vor- und/oder nachgelagerten Linien- oder Anlagenstörungen kann die Drückwalzmaschine mit nur einer Spindel weiter betrieben werden.

Die Erfindung wird nachfolgend anhand von bevorzugten Ausführungsbeispielen näher erläutert, welche schematisch in den Zeichnungen dargestellt sind. In den Zeichnungen zeigen:
- Fig. 1: eine perspektivische Ansicht einer erfindungsgemäßen Drückwalzmaschine ohne Schutzeinhausung und Be- und Entladeeinrichtung;
- Fig. 2: eine vergrößerte Darstellung zu der Spanneinrichtung der erfindungsgemäßen Drückwalzmaschine mit einem eingespannten Werkstück im Querschnitt;
- Fig. 3: eine vergrößerte teilgeschnittene perspektivische Detaildarstellung zu der Spanneinrichtung nach Fig. 2;
- Fig. 4: eine weitere vergrößerte teilgeschnittene perspektivische Detaildarstellung zum Verstellmechanismus zu der Spanneinrichtung gemäß den Figuren 2 und 3;
- Fig. 5: eine Querschnittsansicht einer alternativen Spanneinrichtung für eine erfindungsgemäße Drückwalzmaschine;
- Fig. 6: eine Draufsicht auf die Spanneinrichtung von Fig. 5;
- Fig. 7: eine perspektivische Ansicht der Spanneinrichtung nach den Figuren 5 und 6;
- Fig. 8: eine weitere Querschnittsansicht zur Spanneinrichtung nach den Figuren 5 bis 7, wobei in der rechten Hälfte das Spannelement in der Löseposition gezeigt ist; und
- Fig. 9: eine weitere Querschnittsansicht der Spanneinrichtung nach den Figuren 5 bis 8, wobei in der rechten Hälfte eine Zwischenposition beim Spannen gezeigt ist.

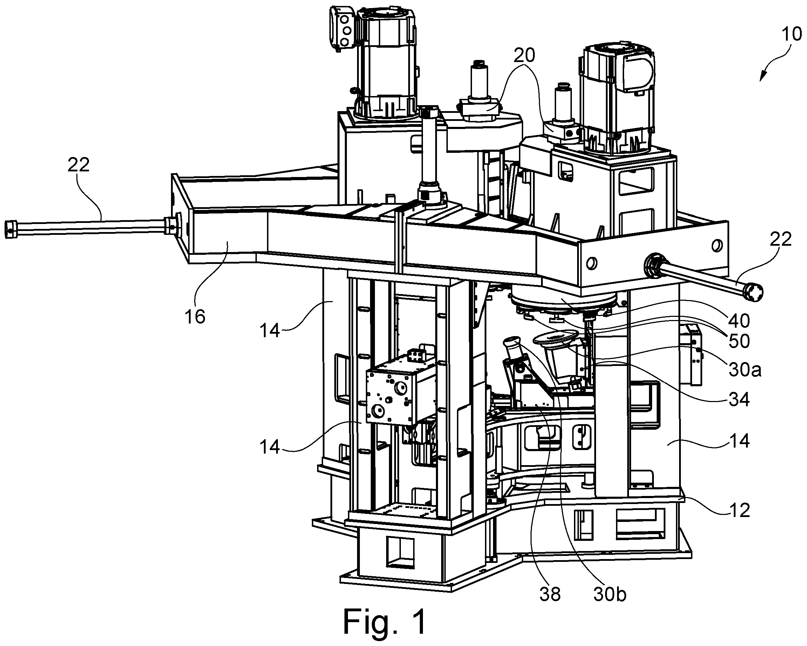

Eine erfindungsgemäße Drückwalzmaschine 10 gemäß Fig. 1 weist einen Grundrahmen 12 mit insgesamt drei Vertikalsäulen 14 auf, welche einen Arbeitsraum umschließen. An einem plattenförmigen Deckbereich 16 sind insgesamt zwei drehend angetriebene Spindeln 20 linear verschiebbar mittels Linearantrieben 22 zwischen einer äußeren Be- und Ladeposition und einer mittigen Arbeitsposition wechselweise verstellbar gelagert.

An der zum Arbeitsraum nach unten gerichteten Unterseite jeder Spindel 20 ist eine Spanneinrichtung 40 zum Aufnehmen und Halten eines Werkstücks 5 in einer hängenden Position vorgesehen. An der trommelförmigen Spanneinrichtung 40 sind zum Spannen des Werkstücks 5 entlang des Umfangs verteilt klauenförmige Spannelemente 50 angeordnet, welche nachfolgend noch näher beschrieben werden.

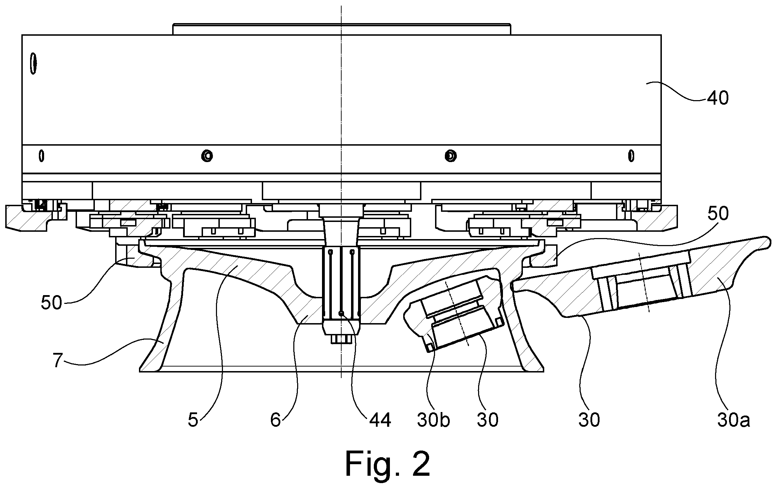

An jeder der Vertikalsäulen 14 sind radial und vertikal verstellbar sowie grundsätzlich auch anwinkelbare Umformrollen 30 vorgesehen, wobei an einem Außensupport 34 jeweils eine Außenumformrolle 30a und an einem Innensupport 38 jeweils eine Innenumformrolle 30b drehend gelagert sind. Die Innenrollen 30b sind zum Einfahren in einen Innenraum des Werkstücks 5 und die Außenrollen 30a zum Bearbeiten eines Außenumfangs des Werkstücks 5 ausgebildet, wie anschaulich in Fig. 2 dargestellt ist. Die Außenrollen 30a und die Innenrollen 30b sind axial und radial verfahrbar.

Gemäß Fig. 2 wird ein trommelförmiges Werkstück 5, welches ein insbesondere gegossener oder geschmiedeter Rohling für ein Fahrzeugrad ist, an der Spanneinrichtung 40 hängend eingespannt. Das Werkstück 5 weist eine Nabe 6 mit einem Mittenloch auf, in welches ein Zentrierdorn 44 der Spanneinrichtung 40 zur Zentrierung eingreift. Zum kraft- und formschlüssigen Halten werden mehrere klauenförmige Spannelemente 50 an einen radial äußeren und oberen Rand des Werkstücks 5 zugestellt und das Werkstück 5 axial gegen das Spannfutter 40 gedrückt.

Die Außenumformrollen 30a und die Innenumformrollen 30b werden jeweils paarweise zueinander an einen trommelförmigen Umfangsabschnitt 7 des Werkstücks 5 zugestellt und können zur Einstellung eines Formgebungsspaltes radial und/oder axial zueinander verfahren werden, so dass der Umfangsabschnitt 7 drückgewalzt und ein individueller Wanddickenverlauf mit Wanddickenänderungen ausgeformt werden kann. Insbesondere kann an dem Umfangswandabschnitt 7 ein verdickter Hump und ein Felgenhorn zur Aufnahme eines Fahrzeugreifens ausgeformt werden.

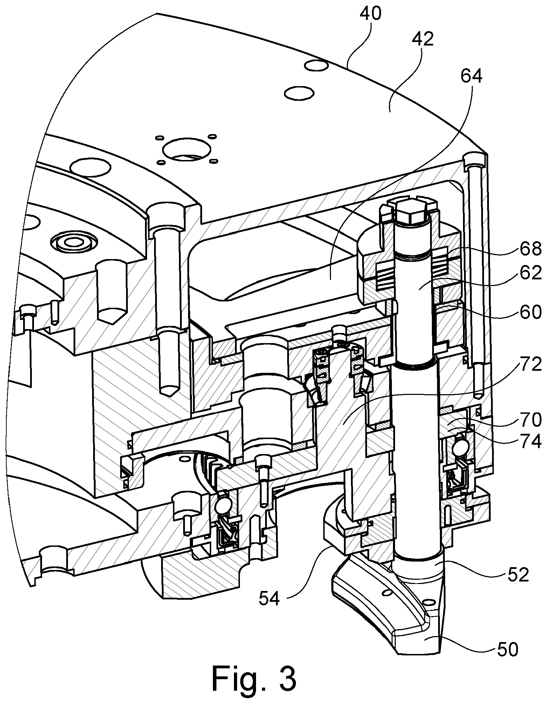

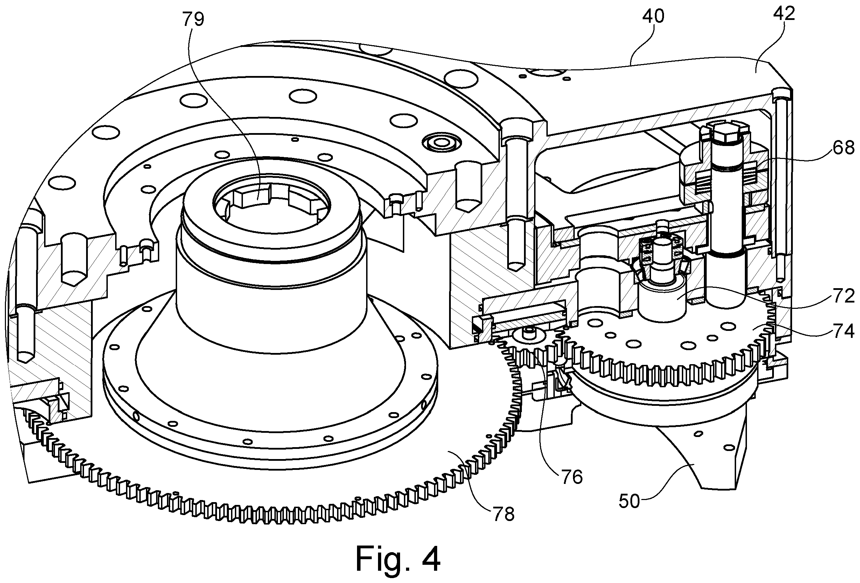

Ein Aufbau der Spanneinrichtung 40 für eine erfindungsgemäße Drückwalzmaschine 10 wird nachfolgend in Zusammenhang mit den Figuren 3 und 4 näher erläutert. Die trommelförmige Spanneinrichtung 40 weist dabei ein etwa topfförmiges Gehäuse 42 auf, in welchem eine erste Stelleinrichtung 60 zum axialen Verstellen der klauenförmigen Spannelemente 50 in einer vertikalen Spannrichtung vorgesehen ist. Die Spannelemente 50 sind dabei an einem Hubschaft 52 angeordnet, welche mit einem Stellzylinder 62 und/oder einer Hubplatte 64 in Verbindung stehen, um die Spannelemente 50 zwischen einer unteren Löseposition und einer oberen Spannposition zu bewegen.

In der Spannposition wird ein Werkstück 5 durch die Spannelemente 50 nach oben gegen korrespondierende Gegenhalter 54 gedrückt, welche zusammen mit dem jeweiligen Spannelement 50 an einer plattenförmigen Scheibe 74 einer zweiten Stelleinrichtung 70 gelagert sind. Die Scheibe 74 weist dabei eine Außenverzahnung auf, welche über ein Zwischenrad 76 mit einem zentralen Stellglied 78 in Verbindung steht, welches als ein außenverzahntes Zahnrad ausgebildet ist. Durch eine Drehbewegung des zentralen Stellgliedes 78 wird über das Zwischenrad 76 eine Drehbewegung auf die jeweilige Scheibe 74 übertragen, an welcher das Spannelemente 60 mit dem Hubschaft 52 exzentrisch zu einer Scheibenachse 72 gelagert sind. Durch die Drehbewegung wird somit ein radialer Abstand der Spannelemente 50 zu der mittigen Drehachse verändert, so dass durch ein Verstellen des Stellrades 78 in einfacher Weise eine radiale Vorpositionierung der Stellglieder 50 zur Anpassung an eine Durchmesseränderung des Werkstücks 5 erfolgen kann.

Um den Umfang des zentralen Stellgliedes 78 sind mehrere Scheiben 74 jeweils mit einem Spannelement 50 und einem Gegenhalter 54 angeordnet, um ein Werkstück 5 gleichmäßig entlang des Umfangs zu spannen.

Zum axialen Einspannen wird die Spannkraft durch den jeweiligen Stellzylinder 62 an dem Spannelement 50 und/oder eine Hubplatte 64 erzeugt, welche durch einen nicht dargestellten axialen Hubmechanismus zum gleichmäßigen Betätigen aller Spannelemente 50 aktiviert werden kann. Über eine Federeinrichtung 68 am oberen Ende des Hubschaftes 52 kann eine Vorspannung und Kompensation von Dickenunterschieden erfolgen. Über die Federspanneinrichtung 68 kann grundsätzlich auch eine zusätzliche axiale Spannkraft zum Spannen des Werkstücks 5 aufgebracht werden.

Zur konzentrischen Bewegung der Spannelemente 50 und der 54 sind je Spannelement 50 eine radiale nutförmige Führung in der Führungsscheibe 65 vorgesehen.

Zur zentralen Durchmesserverstellung ist oberhalb der Spindelantriebe 20 ein zentrales Verstellglied mit Positionserfassung vorgesehen, welches über eine Antriebswelle mit der Vielkeilkupplung 79 verbunden ist und entsprechenden Verstell- und Fliehkräfte der Spannelemente 50 entgegenwirken kann.

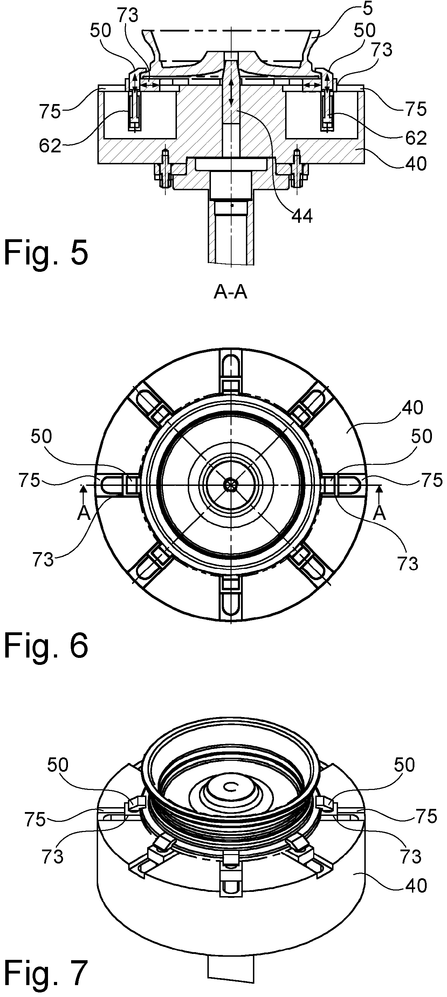

Eine alternative Spanneinrichtung 40 für die erfindungsgemäße Drückwalzmaschine 10 ist in den Figuren 5 bis 9 gezeigt. Entsprechend der Figur 5 weist die Spanneinrichtung 40 einen trommelförmigen Grundkörper auf, an dessen Stirnseite zum Einspannen eines Werkstücks 5 eine Vielzahl von Spannelementen 50, konkret acht Spannelemente 50, verteilt entlang des Umfangs des Werkstücks 5 angeordnet sind. Jedes Spannelement 50 ist zusammen mit einem zugehörigen Stellzylinder 62 an einem plattenförmigen Schlitten 73 parallel zur mittigen Drehachse verstellbar. Die Schlitten 73 sind entlang von radial gerichteten Führungsnuten in dem trommelförmigen Grundkörper radial verfahrbar gelagert. Zum Zentrieren des Werkstücks 5 ist ein mittiger Zentrierdorn 44 vorgesehen, welcher axial in eine entsprechende Mittenöffnung des Werkstücks 5 eingefahren werden kann.

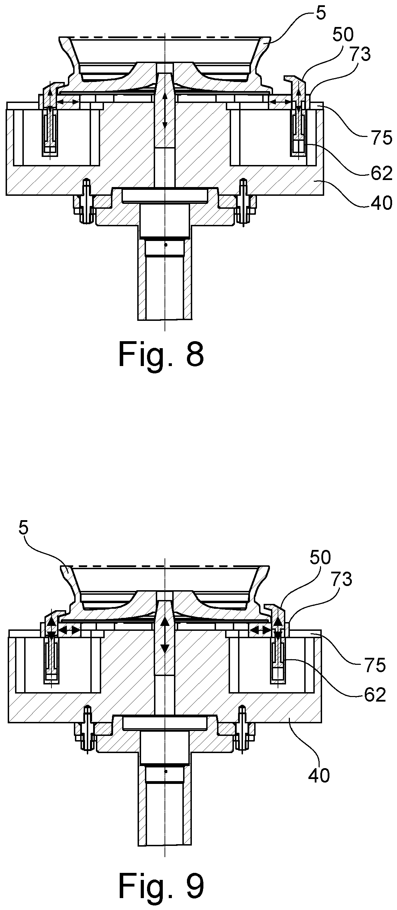

Zum Spannen des Werkstücks 5 befinden sich zunächst die Spannelemente 50 in einer Löseposition, welche schematisch in der rechten Hälfte der Figur 8 dargestellt ist. In dieser Löseposition sind die Schlitten 73 der zweiten Stelleinrichtung radial nach außen verfahren. Gleichzeitig sind die Spannelemente 50 durch die Stellzylinder 62 gemäß der Darstellung von Figur 8 axial nach oben verfahren.

Wenn sich alle Spannelemente 50 in dieser Löseposition befinden, kann ein Werkstück 5 aufgesetzt und mit dem Zentrierdorn 44 konzentrisch zur Drehachse zentriert werden.

Über die nicht näher dargestellte zweite Stelleinrichtung werden die Schlitten 73 radial nach innen, vorzugsweise durch nicht dargestellte Stellzylinder, verfahren, bis die Spannelemente 50 radial zur Anlage an das Werkstück 5 gelangen. Dies ist anschaulich in der rechten Hälfte der Figur 9 dargestellt.

Ausgehend von dieser Vorpositionierung durch die zweite Stelleinrichtung mit den Schlitten 73 kann nunmehr das Werkstück 5 durch die Spannelemente 50 fest eingespannt werden, wobei der Zustand erreicht wird, welcher anschaulich in den Figuren 5 bis 7 dargestellt ist. Hierzu werden über die Stellzylinder 62 die Spannelemente 50 nach unten verfahren, wobei hierdurch das Werkstück 5 gegen den Grundkörper der Spanneinrichtung 40 gedrückt und fest eingespannt wird. Zum Lösen des Werkstücks 5 können die Spannelemente 50 wieder in umgekehrter Abfolge zurück in ihre Ausgangs- oder Löseposition gemäß Figur 8 verfahren werden.

Auch bei dieser Ausführungsvariante der Erfindung kann durch die vorzugsweise radial und linear verfahrbaren Schlitten 73 eine Vorpositionierung der Spannelemente 50 durch die zweite Stelleinrichtung bewirkt werden. Hierdurch kann die Spanneinrichtung ein effizientes Spannen von Werkstücken 5 mit unterschiedlichen Außendurchmessern ermöglichen.

Der Spann- oder Zentrierdorn 44 kann grundsätzlich alternativ als Backenspannfutter ausgeführt sein, so dass er in der Innenbohrung und/oder außen auf einem Angusszapfens der Gussrohlings spannen kann.

Das Spannelement 50 kann grundsätzlich alternativ auch durch eine Schwenkbewegung axial an das Werkstück 5 zum Spannen zugestellt werden.

## Patentansprüche

1. Drückwalzmaschine zum Drückwalzen eines im Wesentlichen rotationssymmetrischen Werkstücks (5) mit einem trommelförmigem Umfangsabschnitt (7), mit
- einer Spindel (20), welche um eine Spindelachse drehend antreibbar ist,
- einer Spanneinrichtung (40), welche an der Spindel (20) angeordnet ist und mehrere Spannelemente (50) aufweist, welche zwischen einer Spannposition, in welcher die Spannelemente (50) an einem Außenumfangsbereich des Werkstücks (5) mit einer vorgegebenen Spannkraft anliegen und das Werkstück (5) zum Umformen an der Spindel (20) halten, und einer Löseposition, in welcher die Spannelemente (50) zum Lösen des Werkstücks (5) von der Spindel (20) von dem Werkstück (5) definiert beabstandet sind, mittels einer ersten Stelleinrichtung (60) verstellbar sind, wobei durch die erste Stelleinrichtung (60) die Spannkraft zum Halten des Werkstücks (5) an der Spindel (20) beim Umformen aufbringbar ist, und
- mehreren Umformrollen (30), welche an den trommelförmigen Umfangsabschnitt (7) des Werkstücks (5) zum Umformen des Umfangsabschnitts (7) des Werkstücks radial und axial zustellbar sind,
**dadurch gekennzeichnet,**
- **dass** an der Spanneinrichtung (40) eine zweite Stelleinrichtung (70) vorgesehen ist, mit welcher eine Position der Spannelemente (50) zum Anpassen an einen Durchmesser des Werkstücks (5) in einer radialen Richtung einstellbar ist, und
- **dass** eine Steuereinrichtung vorgesehen ist, mit welcher die zweite Stelleinrichtung (70) abhängig von dem Durchmesser des umzuformenden Werkstücks (5) betätigbar ist, so dass die Spannelemente (50) abhängig vom Durchmesser des Werkstücks (5) radial vorpositioniert werden.

2. Drückwalzmaschine nach Anspruch 1,
**dadurch gekennzeichnet,**
**dass** die Spannelemente (50) durch die erste Stelleinrichtung (60) zwischen der Spannposition und der Löseposition axial und/oder radial verstellbar sind.

3. Drückwalzmaschine nach Anspruch 1 oder 2,
**dadurch gekennzeichnet,**
**dass** die erste Stelleinrichtung (60) mindestes einen Stellzylinder (62) aufweist, welcher vorzugsweise hydraulisch betrieben ist.

4. Drückwalzmaschine nach Anspruch 3,
**dadurch gekennzeichnet,**
**dass** jedem Spannelement (50) ein Stellzylinder (62) zugeordnet ist, durch welchen das Spannelement (50) jeweils zwischen der Spannposition und der Löseposition verfahrbar ist.

5. Drückwalzmaschine nach einem der Ansprüche 1 bis 4,
**dadurch gekennzeichnet,**
**dass** jedes Spannelement (50) auf einer drehbaren Scheibe (74) exzentrisch zu einer Scheibenachse (72) gelagert ist, wobei die Scheibenachsen (72) parallel zur Spindelachse gerichtet sind, und
**dass** die zweite Stelleinrichtung (70) ein Stellglied (78) zum Verdrehen der Scheiben (74) mit den Spannelementen (50) aufweist.

6. Drückwalzmaschine nach einem der Ansprüche 1 bis 4,
dass jedes Spannelement (50) auf einem radial verfahrbaren oder schwenkbaren Schlitten (73) gelagert ist und
die zweite Stelleinrichtung (70) zum radialen Verfahren oder Verschwenken der Schlitten (73) ausgebildet ist.

7. Drückwalzmaschine nach einem der Ansprüche 1 bis 6,
**dadurch gekennzeichnet,**
**dass** die Spindelachse vertikal angeordnet ist und
**dass** die Spanneinrichtung (40) hängend an der Spindel (20) angeordnet ist, wobei ein Werkstück (5) von unten einspannbar ist.

8. Drückwalzmaschine nach einem der Ansprüche 1 bis 7,
**dadurch gekennzeichnet,**
**dass** mindestens eine Abzugsöffnung vorgesehen ist und
**dass** eine Absaugeinrichtung vorgesehen ist, mit welcher Luft und/oder Dunst durch die mindestens eine Abzugsöffnung absaugbar ist.

9. Drückwalzmaschine nach einem der Ansprüche 1 bis 8,
**dadurch gekennzeichnet,**
**dass** an der Spanneinrichtung (40) ein mittiger Zentrierdorn (44) angeordnet ist, welcher federnd und/oder flexibel ausgebildet ist.

10. Drückwalzmaschine nach einem der Ansprüche 1 bis 9,
**dadurch gekennzeichnet,**
**dass** die Steuereinrichtung zum Zuführen von Daten zum Werkstück (5), insbesondere von Daten zum Durchmesser des Werkstücks (5), mit einer Leitstelle und/oder mindestens einem Sensor zum Erfassen des Werkstücks (5) mit dem Durchmesser des Werkstücks (5) verbunden ist.

11. Drückwalzmaschine nach einem der Ansprüche 1 bis 10,
**dadurch gekennzeichnet,**
**dass** für ein flexibles Umformen jedes einzelnen Werkstücks (5) die Steuereinrichtung eine Bewegung der Umformrollen (30) beim Umformen steuert.

12. Drückwalzmaschine nach einem der Ansprüche 1 bis 11,
**dadurch gekennzeichnet,**
**dass** mindestens eine Außenumformrolle (30a) und mindestens eine Innenumformrolle (30b) vorgesehen sind, welche an einem Außenumfang beziehungsweise einem Innenumfang des trommelförmigen Umfangsabschnitts (7) des Werkstücks (5) anliegen und welche zum Umformen und Ausformen eines Wanddickenverlaufs mit sich ändernder Wanddicke durch die Steuereinrichtung in axialer und radialer Richtung zueinander verstellbar sind und/oder ein Anstellwinkel der mindestens einen Innenumformrolle (30b) veränderbar ist.

13. Drückwalzmaschine nach einem der Ansprüche 1 bis 12,
**dadurch gekennzeichnet,**
**dass** zwei Wechselspindeln (20a, 20b) vorgesehen sind, wobei sich eine erste Wechselspindel (20a) im Arbeitsraum befindet, während eine zweite Wechselspindel (20b) sich in einer Be- und/oder Entladeposition befindet, wobei die zwei Wechselspindeln (20a, 20b) wechselweise zueinander verfahrbar sind.

14. Drückwalzmaschine nach einem der Ansprüche 1 bis 13,
**dadurch gekennzeichnet,**
**dass** eine Messeinrichtung angeordnet ist, durch welche prozessrelevante Abmessungen bzw. Daten des Werkstücks (5) vor und/oder nach dem Umformen erfassbar sind.

15. Drückwalzmaschine nach einem der Ansprüche 1 bis 14,
**dadurch gekennzeichnet,**
**dass** mindestens eine Kühleinrichtung und/oder eine Wärmeschutzeinrichtung für eine Halbwarm- und/oder Warmumformung des Werkstücks (5) vorgesehen sind.

16. Drückwalzmaschine nach einem der Ansprüche 1 bis 15,
**dadurch gekennzeichnet,**
**dass** an einem Innensupport (38) und/oder einem Außensupport (34) an einer Lagerung mindestens einer Außenumformrolle (30a) und/oder mindestens einer Innenumformrolle (30b) eine Schnellspanneinrichtung angeordnet ist, mit welcher ein halbautomatischer oder vollautomatischer Rollenwechsel durchführbar ist.

17. Drückwalzmaschine nach einem der Ansprüche 1 bis 16,
**dadurch gekennzeichnet,**
**dass** in einem Umformbereich das Werkstück (5) eine unterschiedliche Temperatur zu einem Spann- und Zentrierbereich aufweist.

18. Verfahren zum Drückwalzen eines im Wesentlichen rotationssymmetrischen Werkstücks (5) mit einem trommelförmigem Umfangsabschnitt (7), insbesondere mit einer Drückwalzmaschine nach einem der Ansprüche 1 bis 17, wobei
- das Werkstück (5) mittels einer Spanneinrichtung (40) an einer Spindel (20) eingespannt wird, wobei die Spanneinrichtung (40) mehrere Spannelemente (50) aufweist, welche zwischen einer Spannposition, in welcher die Spannelemente (50) an einem Außenumfangsbereich des Werkstücks (5) mit einer vorgegebenen Spannkraft anliegen und das Werkstück (5) zum Umformen an der Spindel (20) halten, und einer Löseposition, in welcher die Spannelemente (50) zum Lösen des Werkstücks (5) von der Spindel (20) von dem Werkstück (5) definiert beabstandet sind, mittels einer ersten Stelleinrichtung (60) verstellt werden, wobei durch die erste Stelleinrichtung (60) die Spannkraft zum Halten des Werkstücks (5) an der Spindel (20) beim Umformen aufgebracht wird,
- die Spindel (20) um eine Spindelachse drehend angetrieben wird und
- mehrere Umformrollen (30) an das Werkstück (5) zum Umformen des Umfangsabschnitts (7) radial und axial zugestellt werden,
**dadurch gekennzeichnet,**
- **dass** an der Spanneinrichtung (40) eine zweite Stelleinrichtung (70) vorgesehen ist, mit welcher eine Position der Spannelemente (50) an einen Durchmesser des Werkstücks (5) angepasst und in die Spannelemente (50) in einer radialen Richtung einstellt werden, und
- **dass** eine Steuereinrichtung vorgesehen ist, mit welcher die zweite Stelleinrichtung (70) abhängig von dem Durchmesser des umzuformenden Werkstücks (5) betätigt wird, so dass die Spannelemente (50) abhängig vom Durchmesser des Werkstücks (5) radial vorpositioniert werden.

## Claims

1. Flow-forming machine for flow-forming a substantially rotation-symmetric workpiece (5) having a drum-shaped circumferential portion (7), comprising
- a spindle (20) which can be driven in rotation about a spindle axis,
- a clamping device (40) which is arranged on the spindle (20) and has a plurality of clamping elements (50) which are adjustable between a clamping position, in which the clamping elements (50) abut against an outer circumferential region of the workpiece (5) with a predetermined clamping force and hold the workpiece (5) on the spindle (20) for forming, and a release position, in which the clamping elements (50) are spaced from the workpiece (5) in a defined manner for releasing the workpiece (5) from the spindle (20), by means of a first actuating device (60), wherein the clamping force for holding the workpiece (5) on the spindle (20) during forming can be applied by the first actuating device (60), and
- a plurality of forming rollers (30) which are radially and axially feedable to the drum-shaped circumferential portion (7) of the workpiece (5) for forming the circumferential portion (7) of the workpiece,
**characterized in that**
- a second actuating device (70) is provided on the clamping device (40), by means of which a position of the clamping elements (50) can be set in a radial direction for adapting to a diameter of the workpiece (5), and
- **in that** a control device is provided, by means of which the second actuating device (70) can be actuated depending on the diameter of the workpiece (5) to be formed, such that the clamping elements (50) are radially pre-positioned depending on the diameter of the workpiece (5).

2. Flow-forming machine according to claim 1,
**characterized in that**
the clamping elements (50) are axially and/or radially adjustable between the clamping position and the release position by means of the first actuating device (60).

3. Flow-forming machine according to claim 1 or 2,
**characterized in that**
the first actuating device (60) comprises at least one actuating cylinder (62), which is preferably hydraulically operated.

4. Flow-forming machine according to claim 3,
**characterized in that**
each clamping element (50) is assigned an actuating cylinder (62) by means of which the clamping element (50) is displaceable in each case between the clamping position and the release position.

5. Flow-forming machine according to any one of claims 1 to 4,
**characterized in that**
each clamping element (50) is mounted on a rotatable disk (74) eccentrically to a disk axis (72), wherein the disk axes (72) are oriented parallel to the spindle axis, and
**in that** the second actuating device (70) has an actuator (78) for rotating the disks (74) with the clamping elements (50).

6. Flow-forming machine according to any one of claims 1 to 4,
**characterized in that**
each clamping element (50) is mounted on a radially displaceable or pivotable carriage (73), and
the second actuating device (70) is configured for radially displacing or pivoting the carriages (73).

7. Flow-forming machine according to any one of claims 1 to 6,
**characterized in that**
the spindle axis is arranged vertically, and
**in that** the clamping device (40) is arranged suspended from the spindle (20), wherein a workpiece (5) can be clamped from below.

8. Flow-forming machine according to any one of claims 1 to 7,
**characterized in that**
at least one discharge opening is provided, and
**in that** an suction device is provided, by means of which air and/or fumes can be suctioned-off through the at least one discharge opening.

9. Flow-forming machine according to any one of claims 1 to 8,
**characterized in that**
a central centering pin (44) is arranged on the clamping device (40), which pin is configured to be resilient and/or flexible.

10. Flow-forming machine according to any one of claims 1 to 9,
**characterized in that**
the control device for supplying data concerning the workpiece (5), in particular data concerning the diameter of the workpiece (5), is connected to a control station and/or to at least one sensor for identifying the workpiece (5) using the diameter of the workpiece (5).

11. Flow-forming machine according to any one of claims 1 to 10,
**characterized in that**
for flexible forming of each individual workpiece (5), the control device controls a movement of the forming rollers (30) during forming.

12. Flow-forming machine according to any one of claims 1 to 11,
**characterized in that**
at least one outer forming roller (30a) and at least one inner forming roller (30b) are provided, which abut against an outer circumference or an inner circumference of the drum-shaped circumferential portion (7) of the workpiece (5) and which, for forming and shaping a wall thickness profile with changing wall thickness, are adjustable in the axial and radial direction relative to one another by the control device and/or a pitch angle of the at least one inner forming roller (30b) is variable.

13. Flow-forming machine according to any one of claims 1 to 12,
**characterized in that**
two interchangeable spindles (20a, 20b) are provided, wherein a first interchangeable spindle (20a) is located in the working chamber, while a second interchangeable spindle (20b) is located in a loading and/or unloading position, wherein the two interchangeable spindles (20a, 20b) are displaceable alternately relative to one another.

14. Flow-forming machine according to any one of claims 1 to 13,
**characterized in that**
a measuring device is arranged by means of which process-relevant dimensions or data of the workpiece (5) can be identified prior to and/or after forming.

15. Flow-forming machine according to any one of claims 1 to 14,
**characterized in that**
at least one cooling device and/or one heat-protective device are provided for semi-hot and/or hot shaping of the workpiece (5).

16. Flow-forming machine according to any one of claims 1 to 15,
**characterized in that**
a quick-release clamping device, by means of which a semi-automatic or fully automatic roller change can be carried out, is arranged on an inner support (38) and/or an outer support (34) on a bearing of at least one outer forming roller (30a) and/or at least one inner forming roller (30b).

17. Flow-forming machine according to any one of claims 1 to 16,
**characterized in that**
in a forming area the workpiece (5) has a temperature differing from a clamping and centering area.

18. Method of flow-forming a substantially rotation-symmetric workpiece (5) having a drum-shaped circumferential portion (7), in particular with a flow-forming machine according to any one of claims 1 to 17, wherein
- the workpiece (5) is clamped to a spindle (20) by means of a clamping device (40), wherein the clamping device (40) has a plurality of clamping elements (50) which are adjustable between a clamping position, in which the clamping elements (50) abut against an outer circumferential region of the workpiece (5) with a predetermined clamping force and hold the workpiece (5) on the spindle (20) for forming, and a release position, in which the clamping elements (50) are spaced from the workpiece (5) in a defined manner for releasing the workpiece (5) from the spindle (20), wherein the clamping force for holding the workpiece (5) on the spindle (20) during forming is applied by means of the first actuating device (60),
- the spindle (20) is driven in rotation about a spindle axis, and
- a plurality of forming rollers (30) are radially and axially fed to the workpiece (5) for forming the circumferential portion (7),
**characterized in that**
- a second actuating device (70) is provided on the clamping device (40), by means of which a position of the clamping elements (50) is adapted to a diameter of the workpiece (5) and the clamping elements (50) are set in a radial direction, and
- **in that** a control device is provided, by means of which the second actuating device (70) is actuated depending on the diameter of the workpiece (5) to be formed, so that the clamping elements (50) are radially pre-positioned depending on the diameter of the workpiece (5).

## Revendications

1. Machine de fluotournage d'une pièce à usiner (5) qui est sensiblement à symétrie de révolution et présente une partie périphérique (7) en forme de tambour, comportant
- une broche (20) susceptible d'être entraînée en rotation autour d'un axe de broche,
- un dispositif de serrage (40) disposé sur la broche (20) et comprenant plusieurs éléments de serrage (50) qui peuvent être déplacés au moyen d'un premier dispositif d'actionnement (60) entre une position de serrage, dans laquelle les éléments de serrage (50) s'appliquent contre une zone périphérique extérieure de la pièce à usiner (5) avec une force de serrage prédéfinie et maintiennent la pièce à usiner (5) sur la broche (20) pour la déformation, et une position de desserrage dans laquelle les éléments de serrage (50) sont espacés de manière définie de la pièce à usiner (5) pour desserrer la pièce à usiner (5) de la broche (20), le premier dispositif d'actionnement (60) permettant d'appliquer la force de serrage pour maintenir la pièce à usiner (5) sur la broche (20) lors de la déformation, et
- plusieurs rouleaux de déformation (30) qui peuvent être approchés radialement et axialement de la partie périphérique (7) en forme de tambour de la pièce à usiner (5) pour déformer la partie périphérique (7) de la pièce à usiner,
**caractérisée en ce que**
- un deuxième dispositif d'actionnement (70) est prévu sur le dispositif de serrage (40), qui permet de régler une position des éléments de serrage (50) dans une direction radiale pour l'adaptation à un diamètre de la pièce à usiner (5), et
- il est prévu un dispositif de commande permettant d'actionner le deuxième dispositif d'actionnement (70) en fonction du diamètre de la pièce à usiner (5) à déformer, de sorte que les éléments de serrage (50) sont prépositionnés radialement en fonction du diamètre de la pièce à usiner (5).

2. Machine de fluotournage selon la revendication 1,
**caractérisée en ce que** les éléments de serrage (50) peuvent être déplacés axialement et/ou radialement entre la position de serrage et la position de desserrage au moyen du premier dispositif d'actionnement (60).

3. Machine de fluotournage selon la revendication 1 ou 2,
**caractérisée en ce que** le premier dispositif d'actionnement (60) comprend au moins un vérin d'actionnement (62) qui est de préférence entraîné par voie hydraulique.

4. Machine de fluotournage selon la revendication 3,
**caractérisée en ce qu'**à chaque élément de serrage (50) est associé un vérin d'actionnement (62) permettant de déplacer l'élément de serrage (50) respectif entre la position de serrage et la position de desserrage.

5. Machine de fluotournage selon l'une des revendications 1 à 4,
**caractérisée en ce que** chaque élément de serrage (50) est monté sur un disque rotatif (74) de façon excentrée par rapport à un axe de disque (72), les axes de disque (72) étant orientés parallèlement à l'axe de la broche, et
**en ce que** le deuxième dispositif d'actionnement (70) comporte un organe d'actionnement (78) pour faire tourner les disques (74) avec les éléments de serrage (50).

6. Machine de fluotournage selon l'une des revendications 1 à 4,
**caractérisée en ce que** chaque élément de serrage (50) est monté sur un chariot (73) déplaçable ou pivotant radialement, et
**en ce que** le deuxième dispositif d'actionnement (70) est conçu pour le déplacement ou pivotement radial des chariots (73).

7. Machine de fluotournage selon l'une des revendications 1 à 6,
**caractérisée en ce que** l'axe de la broche est disposé verticalement, et
**en ce que** le dispositif de serrage (40) est disposé en suspension sur la broche (20), une pièce à usiner (5) pouvant être serrée par le bas.

8. Machine de fluotournage selon l'une des revendications 1 à 7,
**caractérisée en ce qu'**il est prévu au moins une ouverture d'évacuation, et
**en ce qu'**il est prévu un dispositif d'aspiration permettant d'aspirer de l'air et/ou des buées à travers ladite au moins une ouverture d'évacuation.

9. Machine de fluotournage selon l'une des revendications 1 à 8,
**caractérisée en ce qu'**un mandrin de centrage central (44) est disposé sur le dispositif de serrage (40), lequel est conçu de manière élastique et/ou flexible.

10. Machine de fluotournage selon l'une des revendications 1 à 9,
**caractérisée en ce que**, pour fournir des données sur la pièce à usiner (5), en particulier des données sur le diamètre de la pièce à usiner (5), le dispositif de commande est relié à un poste de commande et/ou à au moins un capteur de détection de la pièce à usiner (5) et du diamètre de la pièce à usiner (5).

11. Machine de fluotournage selon l'une des revendications 1 à 10,
**caractérisée en ce que**, pour une déformation flexible de chaque pièce à usiner (5) individuelle, le dispositif de commande contrôle un mouvement des rouleaux de déformation (30) lors de la déformation.

12. Machine de fluotournage selon l'une des revendications 1 à 11,
**caractérisée en ce qu'**il est prévu au moins un rouleau de déformation extérieur (30a) et au moins un rouleau de déformation intérieur (30b), qui s'appliquent respectivement contre une périphérie extérieure et une périphérie intérieure de la partie périphérique (7) en forme de tambour de la pièce à usiner (5) et qui peuvent être déplacés l'un par rapport à l'autre en direction axiale et radiale au moyen du dispositif de commande pour la déformation et le façonnage d'un tracé d'épaisseur de paroi ayant une épaisseur de paroi variable, et/ou un angle d'attaque dudit au moins un rouleau de déformation intérieur (30b) peut être modifié.

13. Machine de fluotournage selon l'une des revendications 1 à 12,
**caractérisée en ce qu'**il est prévu deux broches interchangeables (20a, 20b), une première broche interchangeable (20a) se trouvant dans l'espace de travail, tandis qu'une deuxième broche interchangeable (20b) se trouve dans une position de chargement et/ou de déchargement, les deux broches interchangeables (20a, 20b) pouvant être déplacées en alternance l'une par rapport à l'autre.

14. Machine de fluotournage selon l'une des revendications 1 à 13,
**caractérisée en ce qu'**il est prévu un dispositif de mesure permettant de détecter, avant et/ou après la déformation, les dimensions ou données de la pièce à usiner (5) importantes pour le processus.

15. Machine de fluotournage selon l'une des revendications 1 à 14,
**caractérisée en ce qu'**il est prévu au moins un dispositif de refroidissement et/ou un dispositif de protection thermique pour une déformation à mi-chaud et/ou à chaud de la pièce à usiner (5).

16. Machine de fluotournage selon l'une des revendications 1 à 15,
**caractérisée en ce qu'**un dispositif de serrage rapide est disposé sur un support intérieur (38) et/ou sur un support extérieur (34) d'un palier d'au moins un rouleau de déformation extérieur (30a) et/ou d'au moins un rouleau de déformation intérieur (30b), permettant de réaliser un changement semi-automatique ou entièrement automatique du rouleau.

17. Machine de fluotournage selon l'une des revendications 1 à 16,
**caractérisée en ce que** dans une zone de déformation, la pièce à usiner (5) présente une température différente de celle dans une zone de serrage et de centrage.

18. Procédé de fluotournage d'une pièce à usiner (5) qui est sensiblement à symétrie de révolution et présente une partie périphérique (7) en forme de tambour, en particulier au moyen d'une machine de fluotournage selon l'une des revendications 1 à 17, dans lequel
- la pièce à usiner (5) est serrée sur une broche (20) au moyen d'un dispositif de serrage (40), le dispositif de serrage (40) comprenant plusieurs éléments de serrage (50) qui sont déplacés au moyen d'un premier dispositif d'actionnement (60) entre une position de serrage, dans laquelle les éléments de serrage (50) s'appliquent contre une zone périphérique extérieure de la pièce à usiner (5) avec une force de serrage prédéfinie et maintiennent la pièce à usiner (5) sur la broche (20) pour la déformation, et une position de desserrage, dans laquelle les éléments de serrage (50) sont espacés de manière définie de la pièce à usiner (5) pour desserrer la pièce à usiner (5) de la broche (20), la force de serrage étant appliquée par le premier dispositif d'actionnement (60) pour maintenir la pièce à usiner (5) sur la broche (20) lors de la déformation,
- la broche (20) est entraînée en rotation autour d'un axe de broche, et
- plusieurs rouleaux de déformation (30) sont approchés radialement et axialement de la pièce à usiner (5) pour la déformation de la partie périphérique (7),
**caractérisé en ce que**
- un deuxième dispositif d'actionnement (70) est prévu sur le dispositif de serrage (40), avec lequel une position des éléments de serrage (50) est adaptée à un diamètre de la pièce à usiner (5) et les éléments de serrage (50) sont réglés dans une direction radiale, et
- **en ce qu'**il est prévu un dispositif de commande avec lequel le deuxième dispositif d'actionnement (70) est actionné en fonction du diamètre de la pièce à usiner (5) à déformer, de sorte que les éléments de serrage (50) sont prépositionnés radialement en fonction du diamètre de la pièce à usiner (5).
